# EUROPÄISCHE PATENTANMELDUNG

(11) **EP 2 937 679 A1**
(43) Veröffentlichungstag der Anmeldung: **28.10.2015**
(21) Anmeldenummer: 15165021.5
(22) Anmeldetag: 24.04.2015
(51) Int. Cl.: G01N 15/02

(54) **PARTIKELMESSGERÄT UND EIN VERFAHREN ZUM BETREIBEN DES PARTIKELMESSGERÄTES**

(30) Priorität: 25.04.2014 AT 503052014
(71) Anmelder: AVL List GmbH, 8020 Graz (AT)
(72) Erfinder: Berger, Christos, Dl, 8010 Graz (AT); Dodig, Slaven, MSc, 8020 Graz (AT); Augustin, Martin, Dipl.-Ing., 8051 Graz (AT); Diewald, Robert, Dl, 8010 Graz (AT); Winkler, Günter, Dipl.-Ing., 8055 Graz (AT); Vescoli, Verena, Dr., 8010 Graz (AT); Krüger, Michael, 55262 Heidesheim (DE)
(74) Vertreter: Patentanwälte Pinter & Weiss OG

(57) **Zusammenfassung**

Um ein Partikelmessgerät (8) wirkungsvoll vor zu hohen und/oder zu niedrigen Temperaturen zu schützen, ist vorgesehen, dass die Temperatur (T) des Probengases stromaufwärts von einem ersten temperaturempfindlichen Probengasaufbereitungs- oder Probengasmessgerät (20, 21, 22, 42) im Partikelmessgerät (8) gemessen wird und die gemessene Temperatur (T) mit einem ersten und/oder zweiten Grenzwert (Tₒ, Tᵤ) verglichen wird und das Partikelmessgerät (8) in einen sicheren Modus geschaltet wird, wenn die gemessene Temperatur (T) den ersten Grenzwert (Tₒ) überschreitet oder den zweiten Grenzwert (Tᵤ) unterschreitet

## Beschreibung

Die gegenständliche Erfindung betrifft ein Partikelmessgerät und ein Verfahren zum Betreiben des Partikelmessgerätes mit einer Anzahl von Probengasaufbereitungs- und/oder Probengasmessgeräten dem partikelgeladenes Probengas mit einer Temperatur zugeführt wird.

Einem Partikelmessgerät, wie z.B. ein Partikelzähler, zur Bestimmung von Kennwerten eines partikelgeladenen Gasstromes, wie z.B. die Konzentration von Feststoffpartikeln, die Größenverteilung von Feststoffpartikeln, die Masse von Feststoffpartikeln, die spezifische Oberfläche, etc., wird in der Regel verdünntes partikelgeladenes Probengas zugeführt. Hierzu wird das partikelgeladene Probengas, z.B. Abgas eines Verbrennungsmotors, einem Gasstrom entnommen, beispielsweise aus dem Auspuff eines Fahrzeuges, und dem Partikelmessgerät über eine Probengasleitung, die auch geheizt sein kann, zugeführt. Im Partikelmessgerät können verschiedene Aufbereitungseinheiten oder Messeinheiten vorgesehen sein. Beispielsweise ist häufig eingangsseitig eine Verdünnungseinheit angeordnet, in der das partikelgeladene Probengas in einem bestimmten Verhältnis mit einem im Wesentlichen partikelfreien Verdünnungsgas, wie z.B. gereinigter, getrockneter und gefilterter Luft, verdünnt wird. Eine solche Verdünnungseinheit in Form eines Rotationsverdünners geht z.B. aus der EP 2 025 979 B1 hervor. Eine andere bekannte Verdünnungseinheit ist ein sogenannter Verdünnungstunnel, wie z.B. aus der EP 1 367 379 B1 bekannt. Durch das Verdünnen wird das Probengas durch das kühle Verdünnungsgas in der Regel auch abgekühlt, was die nachfolgenden Komponenten des Partikelmessgerätes vor zu hohen Temperaturen schützt.

Das Partikelmessgerät kann am Eingang aber Probengas unterschiedlicher Temperatur zugeführt bekommen. Insbesondere rohes Abgas, das aus dem Auspuff eines Verbrennungsmotors entnommen wird, kann Temperaturen in einem sehr weiten Temperaturbereich aufweisen. Um das Partikelmessgerät vor den hohen Temperaturen des Probengases zu schützen, werden temperierte Probengasleitungen bestimmter Länge verwendet. Beispielsweise soll ein auf 150°C geheiztes Edelstahlrohr mit einer Länge von 50cm zwischen der Probenentnahmestelle und dem Partikelmessgerät zu hohe Temperaturen am Eingang des Partikelmessgerätes verhindern. Erfahrungsgemäß kann es im normalen Betrieb aber trotzdem passieren, dass das Probengas am Eingang des Partikelmessgerätes kurzfristig höhere Temperaturen aufweisen kann. Verschiedene Komponenten des Partikelmessgerätes haben konstruktions- oder materialbedingt eine bestimmte maximale Temperatur der sie ausgesetzt werden dürfen. Wird diese Temperaturgrenze überschritten, insbesondere für einen längeren Zeitraum, kann es zu Beschädigungen oder sogar Zerstörung, jedenfalls aber zum Ausfall des Partikelmessgerätes kommen.

Auf der anderen Seite sind auch zu niedrige Temperaturen des Probengases, insbesondere Temperaturen unterhalb des jeweiligen Taupunktes, problematisch, da das zur Kondensation innerhalb des Partikelmessgerätes führen kann. Das dabei entstehende Kondensat kann die Funktion des Partikelmessgerätes, oder Komponenten davon, stören oder das Partikelmessgerät sogar beschädigen oder zerstören.

Es ist daher eine Aufgabe der gegenständlichen Erfindung, ein Partikelmessgerät und Verfahren anzugeben, mit dem ein Partikelmessgerät wirkungsvoll vor zu hohen und/oder zu niedrigen Temperaturen geschützt werden kann.

Diese Aufgabe wird erfindungsgemäß dadurch gelöst, dass die Temperatur des Probengases stromaufwärts von einem ersten temperaturempfindlichen Probengasaufbereitungs- oder Probengasmessgerät im Partikelmessgerät gemessen wird und die gemessene Temperatur mit einem ersten und/oder zweiten Grenzwert verglichen wird und das Partikelmessgerät in einen sicheren Modus geschaltet wird, wenn die gemessene Temperatur den ersten Grenzwert überschreitet oder den zweiten Grenzwert unterschreitet. Damit können temperaturempfindliche Geräte im Partikelmessgerät wirkungsvoll vor zu hohen oder zu niedrigen Temperaturen geschützt werden, da das Partikelmessgerät in den sicheren Modus geschaltet wird, sobald die Temperatur den sicheren Temperaturbereich verlässt.

Um im Falle kurzer starker Temperaturschwankungen das Umschalten in den sicheren Modus zu verhindern, kann vorgesehen sein, das Partikelmessgerät in den sicheren Modus zu schalten, wenn die gemessene Temperatur für eine definierte Zeitspanne den ersten Grenzwert überschreitet oder den zweiten Grenzwert unterschreitet. Dem liegt der Gedanke zugrunde, dass kurzfristige hohe Temperaturen auch bei Überschreiten eines oberen Grenzwertes noch problemlos sein können. Erst wenn die zu hohe Temperatur zu lange anliegt, müsste mit Schäden gerechnet werden, was damit verhindert wird.

Wichtig ist, dass der Temperatursensor stromaufwärts vom ersten temperaturempfindlichen Probengasaufbereitungs- oder Probengasmessgerät im Partikelmessgerät angeordnet ist, um dieses wirkungsvoll vor zu hohen Temperaturen zu schützen. Dabei erfasst der Temperatursensor die Temperatur des Probengases und eine Steuereinheit vergleicht die erfasste Temperatur mit einem ersten und/oder zweiten Grenzwert; die Steuereinheit schaltet das Partikelmessgerät in einen sicheren Modus, wenn die gemessene Temperatur den ersten Grenzwert überschreitet oder den zweiten Grenzwert unterschreitet. Dazu kann der Temperatursensor am Eingang des Partikelmessgerätes in einer Eingangsleitung, in einer Bypass-Leitung im Partikelmessgerät oder auch in einer Bypass-Leitung um das Partikelmessgerät angeordnet sein.

In einer Variante der Erfindung zweigt im Partikelmessgerät stromaufwärts vom Partikelmessgerät bzw. stromaufwärts vom ersten temperaturempfindlichen Probengasaufbereitungs- oder Probengasmessgerät eine Bypass-Leitung ab und der Temperatursensor ist in der Bypass-Leitung angeordnet.

Die gegenständliche Erfindung wird nachfolgend unter Bezugnahme auf die Figuren 1 bis 4 näher erläutert, die beispielhaft, schematisch und nicht einschränkend vorteilhafte Ausgestaltungen der Erfindung zeigen. Dabei zeigt
Fig.1 eine Anordnung zur Bestimmung von Kennwerten eines partikelgeladenen Gasstromes mittels eines Partikelmessgerätes,
Fig.2 eine Anordnung mit Bypass-Leitung um das Partikelmessgerät,
Fig.3 eine vorteilhafte Ausgestaltung eines erfindungsgemäßen Partikelmessgerätes
und
Fig.4 eine Ausführungsbeispiel für eine Probengaskonditioniereinrichtung im Partikelmessgerät.

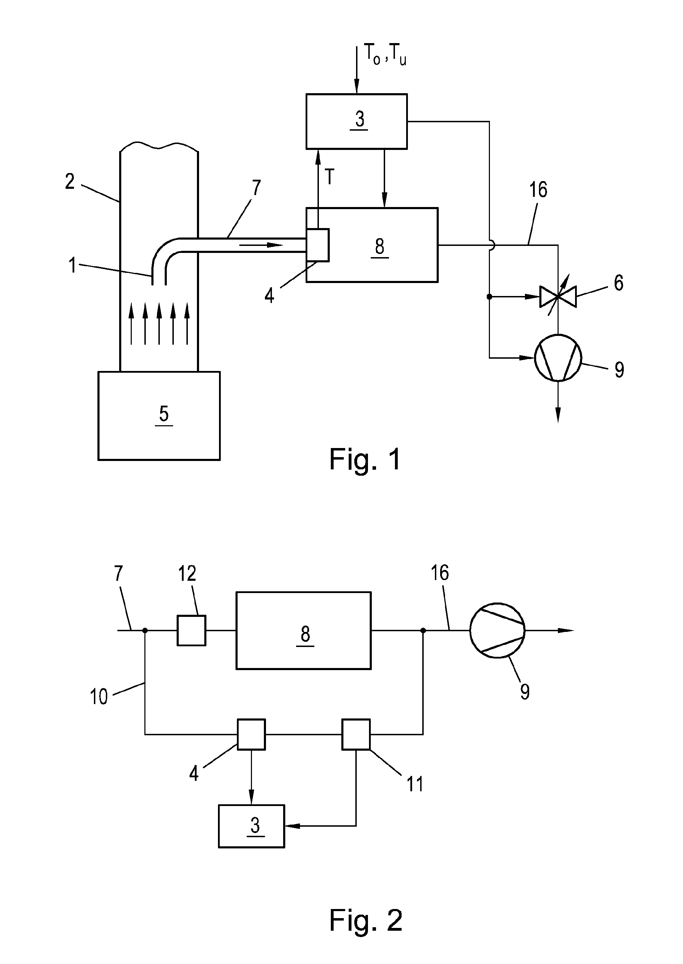

In der Anordnung nach Fig.1 wird mittels einer Abgasentnahmesonde 1 partikelgeladenes Probengas (hier Abgas) aus dem Auspuff 2 eines Verbrennungsmotors 5 entnommen und über eine Probengasleitung 7 einem Partikelmessgerät 8 zugeführt. Stromab des Partikelmessgerätes 8 ist eine Saugpumpe 9 vorgesehen, um einen bestimmten Volumenstrom durch das Partikelmessgerät 8 sicherzustellen. Ebenso kann vor oder nach der Saugpumpe 9 zusätzlich auch eine Volumenstromregeleinheit 6 vorgesehen sein. Eine Steuereinheit 3 steuert die Funktionen des Partikelmessgerätes 8 und gegebenenfalls auch der Saugpumpe 9 und der Volumenstromregeleinheit 6, wie in Fig.1 angedeutet. Am Eingang des Partikelmessgerätes 8 ist ein Temperatursensor 4 angeordnet, z.B. in einer Eingangsleitung 13 des Partikelmessgerätes 8, der die erfasste Temperatur des zugeführten Probengases an die Steuereinheit 3 liefert. Der Temperatursensor 4 ist dabei so anzuordnen, dass dieser stromaufwärts vom ersten temperaturempfindlichen Probengasaufbereitungs- oder Probengasmessgerät im Partikelmessgerät 8 angeordnet ist. Stromaufwärts vom Temperatursensor 4 könnten natürlich Probengasaufbereitungs- oder Probengasmessgeräte angeordnet sein, die nicht temperaturempfindlich sind. Der Temperatursensor 4 könnte aber für die Funktion der Temperaturüberwachung natürlich auch außerhalb des Partikelmessgerätes 8 in der Probengasleitung 7 angeordnet sein.

Als Temperatursensor 4 wird vorzugsweise ein nadelförmiges Thermoelement verwendet, um den Probengasstrom möglichst wenig zu beeinflussen, insbesondere um das Einbringen von unerwünschten Turbulenzen in den Probengasstrom zu verhindern, und um aufgrund der geringen Masse des Temperatursensors 4 ein schnelles Ansprechverhalten der Temperaturmessung zu gewährleisten, was wichtig ist, um kurzfristige Temperaturschwankungen erfassen zu können.

In der Steuereinheit 3 wird die Temperatur T des zugeführten Probengases auf die Überschreitung und/oder die Unterschreitung von Temperaturgrenzwerten Tₒ, Tᵤ überwacht. Die Temperaturgrenzwerten Tₒ, Tᵤ können fix vorgegeben sein, oder können auch von extern vorgegeben werden. Über- oder unterschreitet die Temperatur T den jeweiligen Temperaturgrenzwert Tₒ, Tᵤ wird das Partikelmessgerät 8 in einen sicheren Modus geschaltet, um eine Beschädigung von Komponenten des Partikelmessgerätes 8 durch zu hohe oder zu niedrige Temperatur T zu verhindern. Der sichere Modus könnte z.B. das Schließen eines eingangsseitigen Schaltventils, oder das Schließen einzelner Messkanäle im Partikelmessgerät 8 umfassen. Es könnte auch vorgesehen sein, dass als sicherer Modus durch ein Umschaltventil auf Messung von Umgebungsluft umgeschaltet wird. Ebenfalls wäre es denkbar, über die Saugpumpe 9 und/oder die Volumenstromregeleinheit 6 den Volumenstrom durch das Partikelmessgerät 8 zu reduzieren oder gänzlich zu stoppen. Eine weitere Möglichkeit für einen sicheren Modus ist natürlich das gänzliche Abschalten des Partikelmessgerätes 8. Parallel dazu können natürlich auch entsprechende Warnsignale abgegeben werden, z.B. akustisch oder an einem Display.

Anstatt die momentane Temperatur T zu bewerten, könnte in der Steuereinheit 3 auch überwacht werden, ob die Temperatur T für eine bestimmte definierte Zeitspanne über oder unterhalt des jeweiligen Temperaturgrenzwertes liegt. Sehr kurzfristige hohe Temperaturen T können für das Partikelmessgerät 8 noch akzeptabel sein. Erst wenn die Temperatur T für eine Zeitspanne über dem Grenzwert liegt, könnte das Partikelmessgerät 8 in den sicheren Modus geschaltet werden.

Im Ausführungsbeispiel nach Fig.2 ist der Temperatursensor 4 nicht im Partikelmessgerät 8, sondern in einer Bypass-Leitung 10, die um das Partikelmessgerät 8 herum geführt ist, angeordnet. Die Bypass-Leitung 10 zweigt vor dem Partikelmessgerät 8 ab und mündet stromab des Partikelmessgerätes 8 wieder in die Ausgangsleitung 16. Nachdem die Bypass-Leitung 10 vor dem Partikelmessgerät 8 abzweigt, misst ein in der Bypass-Leitung 10 angeordneter Temperatursensor 4 natürlich auch die Temperatur vor dem Partikelmessgerät 8, bzw. ist ein derart angeordneter Temperatursensor 4 auch stromaufwärts vom Partikelmessgerät 8 angeordnet und damit auch stromaufwärts vom ersten temperaturempfindlichen Probengasaufbereitungs- oder Probengasmessgerät im Partikelmessgerät 8.

Die Bypass-Leitung 10 könnte aber natürlich ebenso im Partikelmessgerät 8 angeordnet werden, wobei die Bypass-Leitung 10 in diesem Fall vor dem ersten temperaturempfindlichen Probengasaufbereitungs- oder Probengasmessgerät im Partikelmessgerät 8, beispielsweise vor einer Probengaskonditioniereinrichtung 20 wie nachfolgend beschrieben, abzweigen muss.

In der Bypass-Leitung 10 und/oder vor oder im Partikelmessgerät 8 könnten auch noch andere Sensoren 11, 12 angeordnet sein, z.B. ein Drucksensor oder ein Feuchtesensor, die ihre Messwerte ebenfalls an die Steuereinheit 3 liefern können. Die Steuereinheit 3 könnte damit auch weitere Sensorsignale für die Überwachung bzw. den Schutz des Partikelmessgeräts 8 nutzen.

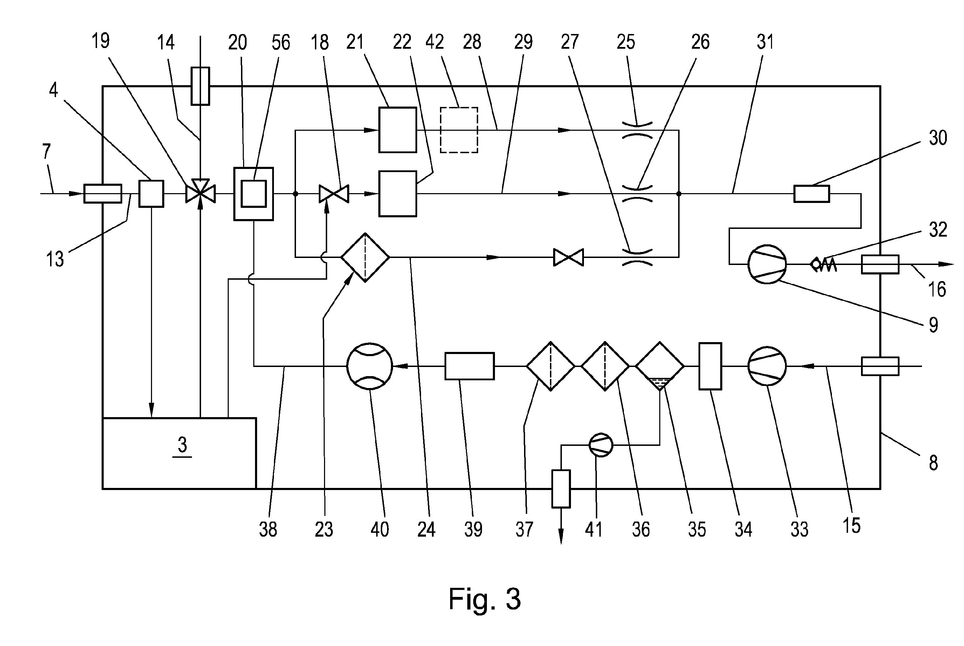

In Fig. 3 ist eine mögliche Ausgestaltung eines Partikelmessgerätes 8 schematisch dargestellt. Eine Probengasleitung 7 ist an das Partikelmessgerät 8 angeschlossen und mündet in eine Eingangsleitung 13 Partikelmessgerät 8. Im Partikelmessgerät 8 sind eine Anzahl von Probengasaufbereitungs- und Probengasmessgeräten angeordnet. Eingangsseitig mündet die Eingangsleitung 13 in einer Probengaskonditioniereinrichtung 20, die das zugeführte Probengas in geeigneter Weise aufbereitet. Stromaufwärts der Probengasaufbereitungseinrichtung 20 kann ein Schaltventil 19 angeordnet sein, mit dem das Partikelmessgerät 8 unter Kontrolle der Steuereinheit 3 abgesperrt werden kann, sodass kein Probengas mehr durchströmen kann. Alternativ könnte das Schaltventil 19 auch auf Zuführung von Außenluft über eine Luftleitung 14 umgeschaltet werden.

Das Partikelmessgerät 8 ist hier zweikanalig mit zwei Messkanälen (eventuell redundant) ausgeführt, indem der zugeführte Probengasstrom im Partikelmessgerät 8 auf zwei parallel angeordnete Messleitungen 28, 29 mit darin angeordneten Probengasmessgeräten 21, 22, wie z.B. Streulichtmessgeräte, Opazimeter, Partikelzähler, Aerosolelektrometer etc., aufgeteilt wird. Selbstverständlich können aber auch mehr als zwei Messkanäle, oder auch nur ein einziger Messkanal, vorgesehen sein. Ebenso ist es denkbar, in einer Messleitung 28, 29 zwei Messgeräte 21, 42 hintereinander anzuordnen, wie in Fig.3 angedeutet. Bei Verwendung von mehreren Probengasmessgeräten 21, 22, 42 kann die Sensitivität des Partikelmessgeräts 8 erhöht werden, indem Probengasmessgeräte 21, 22, 42 mit unterschiedlichen Auflösungen und/oder Messbereichen verwendet werden. In einer Messleitung 29 kann auch ein Absperrventil 18 angeordnet sein, um einen einzelnen Messkanal unter Kontrolle der Steuereinheit 3 abzusperren.

Um den Volumenstrom durch die einzelnen Probengasmessgeräte 21, 22, 42 einfach einstellen zu können, kann eine zu den Messleitungen 28, 29 parallel angeordnete Messgerät-Bypass-Leitung 24, hier mit einer Filtereinheit 23, vorgesehen sein. In jeder der Leitungen kann zusätzlich noch eine kritische Blende 25, 26, 27 angeordnet sein, die ebenfalls der Regelung der Volumenströme in den einzelnen Leitungen 24, 28, 29 dient. Stromab der Probengasmessgeräte 21, 22, 42 werden die einzelnen Leitungen 24, 28, 29 wieder zu einer Auslassleitung 31 zusammengeführt, in der ein Pulsationsdämpfer 30 angeordnet sein kann. In der Auslassleitung 31 kann weiters auch die Saugpumpe 9 angeordnet sein. Auslassseitig kann außerdem noch ein Sicherheitsventil 32 vorgesehen sein, um ein Rückströmen von Umgebungsluft in die Messkanäle des Partikelmessgeräts 8 zu verhindern.

Wenn z.B. das Probengasmessgerät 22 das in Strömungsrichtung gesehen erste temperaturempfindliche Probengasmessgerät wäre, dann könnte der Temperatursensor 4 auch in der Messgerät-Bypass-Leitung 24, die dann gleichzeitig als Bypass-Leitung 10 für den Temperatursensor 10 dient, angeordnet sein.

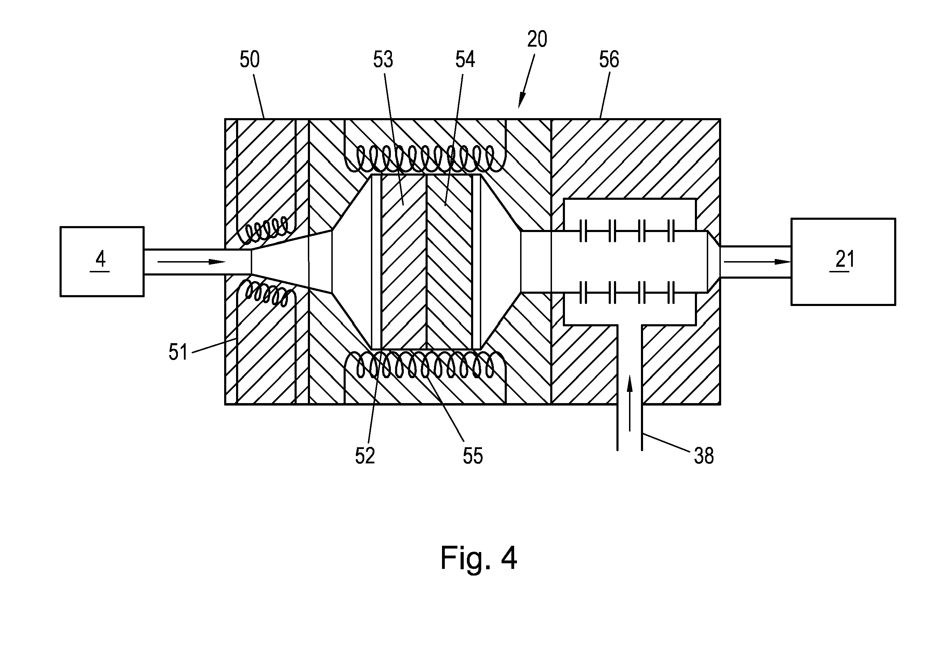

In der Abgasaufbereitungseinrichtung 20 kann auch eine Verdünnungsstufe 56 vorgesehen sein, in der das entnommene Abgas mit Gas bzw. vorzugsweise mit partikelfreier Luft verdünnt wird, wie weiter unten unter Bezugnahme auf Fig.4 noch im Detail beschrieben wird. Zur Bereitstellung der dafür benötigten reinen Luft kann im Partikelmessgerät 8 auch eine Luftaufbereitung vorgesehen sein, wie in Fig.3 beispielhaft dargestellt. Hierbei wird über eine Verdünnungsluftansaugleitung 15 Umgebungsluft mit einer Verdünnungsluftpumpe 33 angesaugt, in einem Gaskühler 34 gekühlt, in einem Kondensatabscheider 35 getrocknet, und in Filtereinheiten 36, 37 gefiltert. Die derart aufbereitete Luft kann dann entnommen und der Abgasaufbereitungseinrichtung 20 über eine Verdünnungsluftleitung 38 zugeführt werden. In der Verdünnungsluftleitung 38 können ebenfalls noch ein Pulsationsdämpfer 39 und eine Massenflussregeleinrichtung 40 angeordnet sein. Abgeschiedenes Kondenswasser kann mittels einer Kondensatpumpe 41 aus dem Partikelmessgerät 8 abgeführt werden.

In der beispielhaften Abgasaufbereitungseinrichtung 20, wie in Fig.4 dargestellt, ist z.B. ein Vorheizabschnitt 50 vorgesehen, in dem das zugeführte Abgas mittels Heizelement 51 vortemperiert wird. Im Vorheizelement 50 werden auch flüchtige Abgasbestandteile in die Gasphase übergeführt. Danach schließt ein Katalysator 52 an, z.B. wie in der AT 13 239 U1 beschrieben, in dem flüchtige Abgasbestandteile aus dem Abgas entfernt werden. Der Katalysator 52 umfasst einen Oxidationskatalysator 53, in dem flüchtige organische Abgasbestandteile verbrannt werden, und eine Schwefelfalle 54, in dem flüchtige sulfatische Partikel gebunden und damit aus dem Abgas entfernt werden. Der Katalysator 52 ist bevorzugt mittels einer Heizeinrichtung 55 temperierbar, z.B. unter Kontrolle der Steuereinheit 3. An den Katalysator 52 schließt stromab eine Verdünnungsstufe 56 an, in der der gereinigte Probengasstrom mit reiner Luft verdünnt wird. Hier ist die Verdünnungsstufe 56 z.B. als poröser Verdünner ausgeführt, wie in der EP 2 264 423 A2 beschrieben. Selbstverständlich sind aber auch andere Ausführungen der Verdünnungsstufe 56 denkbar, z.B. als Rotationsverdünner, wie in der EP 2 025 979 B1 beschrieben, oder als hinlänglich bekannter Verdünnungstunnel. Auch ist eine Ausführung der Abgasaufbereitungseinrichtung 20 ohne nachgeschaltete Verdünnungsstufe 56 oder nur mit Verdünnungsstufe 56 (ohne Vorheizabschnitt 50 und ohne Katalysator 52) denkbar.

## Patentansprüche

1. Verfahren zum Betreiben eines Partikelmessgerätes (8) mit einer Anzahl von Probengasaufbereitungs- und/oder Probengasmessgeräten (20, 21, 22, 42) dem partikelgeladenes Probengas mit einer Temperatur (T) zugeführt wird, **dadurch gekennzeichnet, dass** die Temperatur (T) des Probengases stromaufwärts von einem ersten temperaturempfindlichen Probengasaufbereitungs- oder Probengasmessgerät (20, 21, 22, 42) im Partikelmessgerät (8) gemessen wird und die gemessene Temperatur (T) mit einem ersten und/oder zweiten Grenzwert (Tₒ, Tᵤ) verglichen wird und das Partikelmessgerät (8) in einen sicheren Modus geschaltet wird, wenn die gemessene Temperatur (T) den ersten Grenzwert (Tₒ) überschreitet oder den zweiten Grenzwert (Tᵤ) unterschreitet.

2. Verfahren nach Anspruch 1, **dadurch gekennzeichnet, dass** das Partikelmessgerät (8) in den sicheren Modus geschaltet wird, wenn die gemessene Temperatur (T) für eine definierte Zeitspanne den ersten Grenzwert (Tₒ) überschreitet oder den zweiten Grenzwert (Tᵤ) unterschreitet.

3. Partikelmessgerät mit einer Anzahl von Probengasaufbereitungs- und/oder Probengasmessgeräten (20, 21, 22, 42) und einem Temperatursensor (4), der stromaufwärts von einem ersten temperaturempfindlichen Probengasaufbereitungs- oder Probengasmessgerät (20, 21, 22, 42) im Partikelmessgerät (8) angeordnet ist und die Temperatur (T) des Probengases erfasst und eine Steuereinheit (3) die erfasste Temperatur (T) mit einem ersten und/oder zweiten Grenzwert (Tₒ, Tᵤ) vergleicht und die Steuereinheit (3) das Partikelmessgerät (8) in einen sicheren Modus schaltet, wenn die gemessene Temperatur (T) den ersten Grenzwert (Tₒ) überschreitet oder den zweiten Grenzwert (Tᵤ) unterschreitet.

4. Partikelmessgerät nach Anspruch 3, **dadurch gekennzeichnet, dass** der Temperatursensor (4) am Eingang des Partikelmessgerätes (8) in einer Eingangsleitung (13) angeordnet ist.

5. Partikelmessgerät nach Anspruch 3, **dadurch gekennzeichnet, dass** im Partikelmessgerät (8) stromaufwärts vom ersten temperaturempfindlichen Probengasaufbereitungsoder Probengasmessgerät (20, 21, 22, 42) eine Bypass-Leitung (10) abzweigt und der Temperatursensor (4) in der Bypass-Leitung (10) angeordnet ist.

6. Partikelmessgerät nach Anspruch 3, **dadurch gekennzeichnet, dass** stromaufwärts vom Partikelmessgerät (8) eine Bypass-Leitung (10) abzweigt und der Temperatursensor (4) in der Bypass-Leitung (10) angeordnet ist.
